# DEMANDE DE BREVET EUROPEEN

(11) **EP 1 783 625 A1**
(43) Date de publication de la demande: **09.05.2007**
(21) Numéro de dépôt: 06291651.5
(22) Date de dépôt: 24.10.2006
(51) Int. Cl.: G06F 17/21

(54) **Procédé et système de génération d'un manuel technique**

(30) Priorité: 02.11.2005 FR 0511171
(71) Demandeur: Alstom Transport S.A., 92300 Levallois-Perret (FR)
(72) Inventeur: Mesbah, Nabil, 75012 Paris (FR)
(74) Mandataire: Blot, Philippe Robert Emile

(57) **Abrégé**

Le système comprend, d'une part, un entrepôt de données (16) regroupant des informations se rapportant chacune à au moins un élément technique d'au moins une machine, chaque information étant associé, dans l'entrepôt de données (16), avec l'élément technique auquel elle se rapporte, et, d'autre part :
- des moyens de création (44E) d'une ébauche de manuel (50) définie par une structure de manuel constituée de parties logiques,
- des moyens d'insertion (44E), dans une partie logique de la structure de l'ébauche de manuel (50), d'au moins un rattachement à une information sélectionnée parmi les informations de l'entrepôt (16), et
- des moyens de pilotage (46C) d'un périphérique d'édition (48) de l'ébauche de manuel (50) complétée des rattachements pour générer un manuel (58), autonome de l'entrepôt de données (16).

## Description

La présente invention concerne un procédé et un système de génération d'un manuel technique.

Un manuel est constitué d'un document de présentation structurée d'informations décrivant une machine.

Dans l'état de la technique, un archiviste désirant réaliser un manuel utilise un entrepôt de données, regroupant des informations classées par type d'information : dessin, texte de procédure de maintenance, description d'une pièce, etc.

Un entrepôt de données est un moyen informatique de stockage organisé d'un ensemble de données, ou d'un ensemble de groupes de données où chaque groupe s'identifie à un type de données particulier (maintenance, pièce, etc.). Le stockage est géré soit par un seul logiciel soit par plusieurs logiciels, chacun gérant un groupe de données.

Un entrepôt de données comporte généralement une ou plusieurs bases de données dans chacune desquelles les données sont organisées suivant une structure particulière, s'identifiant généralement avec un support technique de stockage.

L'archiviste incorpore les informations pertinentes à la réalisation du manuel désiré dans une structure de manuel généralement imposée par l'utilisateur de la machine.

L'entrepôt de données est spécialement conçu pour les besoins de l'archiviste. Or, les informations qu'il contient sont fournies par du personnel technique qui n'est pas qualifié pour utiliser les outils de l'archiviste. Le renseignement de l'entrepôt de données est fastidieux et coûteux en temps puisque le personnel technique doit faire appel à une personne qualifiée. En conséquence, il arrive souvent que les informations de l'entrepôt données ne soient pas à jour.

Ainsi, un problème de l'état de la technique réside dans le fait que des parties d'un manuel généré par l'archiviste peuvent être obsolètes dès la création du manuel.

L'invention a pour but de remédier à ce problème en proposant un procédé de génération d'un manuel qui incorpore les informations décrivant la machine les plus à jour.

A cet effet, l'invention a pour objet un procédé de génération d'un manuel constitué d'un document de présentation structurée d'informations décrivant une machine, caractérisé en ce qu'il comprend, d'une part, les étapes consistant à :
- créer un entrepôt de données regroupant des informations se rapportant chacune à au moins un élément technique d'au moins une machine, et
- associer, dans l'entrepôt de données, chaque information avec l'élément technique auquel elle se rapporte,
et, d'autre part, les étapes successives consistant à :
- créer une ébauche de manuel définie par une structure de manuel constituée de parties logiques,
- insérer, dans une partie logique de la structure de l'ébauche, au moins un rattachement à une information sélectionnée parmi les informations de l'entrepôt, et
- piloter un périphérique d'édition de l'ébauche de manuel complétée des rattachements pour générer un manuel, autonome de l'entrepôt de données.

Grâce à l'invention, l'entrepôt de données regroupant les informations est configuré pour être facilement accessible par le personnel technique. En effet, ce dernier peut renseigner l'entrepôt à partir de ce qu'il connaît, c'est-à-dire les éléments techniques de la machine.

Un procédé selon l'invention peut en outre comporter l'une ou plusieurs des caractéristiques suivantes :
- au moins une information de l'entrepôt de données comporte un rattachement à une autre information de l'entrepôt de données ;
- le procédé comprend une étape, consistant à recopier dans l'ébauche les informations rattachées à l'ébauche ;
- le procédé comprend une étape consistant à créer une structure de l'ébauche ;
- la création d'une structure consiste à importer la structure d'une ébauche de manuel déjà créée ;
- le procédé comprend une étape d'association, dans l'entrepôt de données, de chaque information avec au moins un type de manuel, une étape de récupération d'une liste des informations de l'entrepôt rattachées au type de manuel auquel correspond l'ébauche, et une étape d'affichage de la liste des informations récupérées ;
- l'étape d'affichage comporte l'affichage de la structure de l'ébauche en vis-à-vis de la liste des informations, et le procédé comprend une étape de sélection d'une partie logique de la structure et d'une information de la liste par cliquer glisser de l'information vers la partie logique ;
- le procédé comprend une étape de mise en forme de l'ébauche de manuel à l'aide d'une feuille de style associant à chaque partie logique de l'ébauche un style dactylographique prédéterminé ;
- le pilotage du périphérique d'édition génère le manuel dans un des formats choisi parmi : pdf, html, Word.

L'invention a également pour objet un système de génération d'un manuel constitué d'un document de présentation structurée d'informations décrivant une machine, caractérisé en ce qu'il comprend, d'une part un entrepôt de données regroupant des informations se rapportant chacune à au moins un élément technique d'au moins une machine, chaque information étant associée, dans l'entrepôt de données, avec l'élément technique auquel elle se rapporte, et, d'autre part :
- des moyens de création d'une ébauche de manuel définie par une structure de manuel constituée de parties logiques,
- des moyens d'insertion, dans une partie logique de la structure de l'ébauche de manuel, d'au moins un rattachement à une information sélectionnée parmi les informations de l'entrepôt, et
- des moyens de pilotage d'un périphérique d'édition de l'ébauche de manuel complétée des rattachements pour générer un manuel, autonome de l'entrepôt de données.

Un système selon l'invention peut en outre comporter l'une ou plusieurs des caractéristiques suivantes :
- au moins une information de l'entrepôt de données comporte un rattachement à une autre information de l'entrepôt de données ;
- le système comprend des moyens de recopie dans l'ébauche des informations rattachées à l'ébauche ;
- le système comprend des moyens de création d'une structure de l'ébauche ;
- les moyens de création d'une structure sont aptes à importer la structure d'une ébauche de manuel déjà créée ;
- chaque information dans l'entrepôt de données, est associée avec au moins un type de manuel, et le système comprend des moyens de récupération des informations de l'entrepôt rattachées au type de manuel auquel correspond l'ébauche, et des moyens d'affichage d'une liste des informations récupérées ;
- les moyens d'affichage sont aptes à afficher la structure de l'ébauche en vis-à-vis de la liste des informations, et permettent le cliquer glisser d'une information affichée vers une partie logique de la structure de l'ébauche ;
- le système comprend des moyens de mise en forme de l'ébauche de manuel à l'aide d'une feuille de style associant à chaque partie logique l'ébauche un style dactylographique prédéterminé ;
- le système comprend le périphérique d'édition et ce dernier est apte à générer le manuel dans un des formats choisi parmi : pdf, html, Word.

L'invention sera mieux comprise à l'aide la description qui va suivre, donnée uniquement à titre d'exemple et faite en se référant aux dessins annexés, parmi lesquels :
- la figure 1 est une vue schématique représentant un système de génération d'un manuel selon l'invention ;
- la figure 2 est une vue schématique d'un module d'information ; et
- la figure 3 est un schéma blocs représentant les étapes d'un procédé de génération d'un manuel mis en oeuvre par le système de la figure 1.

Dans la description qui va suivre, les entrepôts de données sont des bases de données. Bien évidemment, l'invention est directement transposable au cas des entrepôts de données.

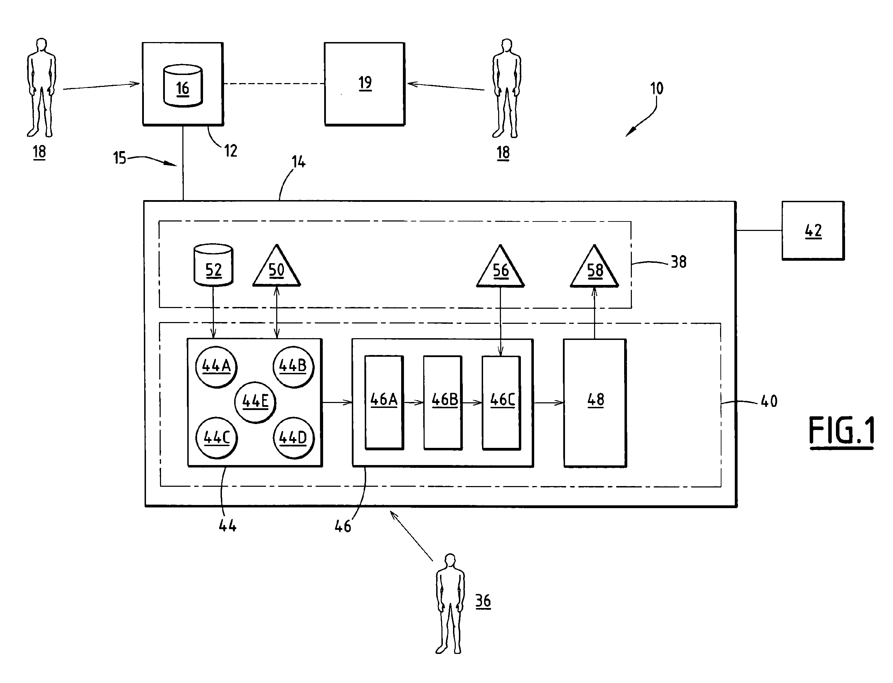

Le système de la figure 1, désigné par la référence générale 10, comprend deux ordinateurs 12, 14 communiquant entre eux par l'intermédiaire d'un réseau informatique 15.

L'un des ordinateurs 12 est un serveur de données sur lequel est installé une base de données 16, dite base globale 16, regroupant des informations se rapportant chacune à au moins un élément technique d'au moins une machine.

La base de données globale 16 est destinée à être renseignée par un personnel technique 18. Le serveur de données 12 comporte ainsi une interface homme/machine par laquelle ce personnel technique 18 renseigne directement la base globale 16. Le serveur de données 12 est par ailleurs connecté à plusieurs ordinateurs distants 19. Le personnel technique 18 qui n'est pas situé sur le site où se trouve le serveur de données 12 renseigne la base globale 16 à distance, en utilisant ces ordinateurs distants 19.

Dans la base globale 16, les informations sont organisées par encapsulation dans un module.

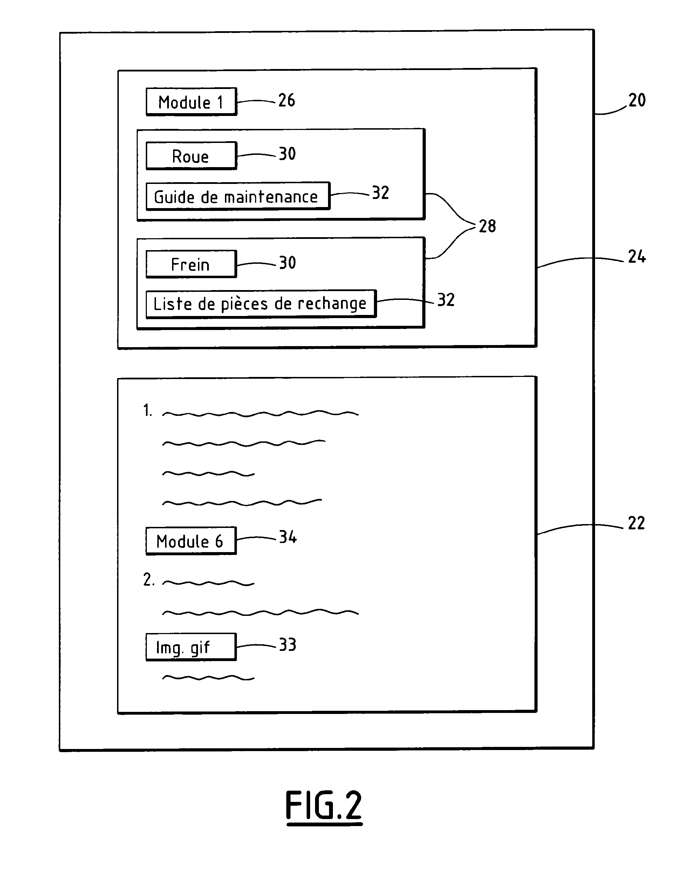

En référence à la figure 2, chaque module 20 comprend, d'une part, un contenu 22 constitué d'informations relatives à un ou plusieurs éléments techniques et, d'autre part, un bloc d'identification 24 regroupant des données définissant le module 20.

Le bloc d'identification 24 comprend notamment un identifiant 26 du module et une partie, dite partie d'environnement 28, pour chaque élément technique auquel le module 20, c'est-à-dire les informations 22 qu'il contient, se rapporte.

Chaque partie d'environnement 28 comporte notamment un identifiant 30 de l'élément technique correspondant, ainsi qu'un identifiant 32 d'un type de manuel dans lequel le contenu peut être inséré, pour l'élément technique correspondant. Les types de manuel sont les suivants : catalogue illustré, guide de maintenance regroupant des tâches de maintenance, manuel de maintenance regroupant l'outillage de maintenance, liste de pièces de rechange. Bien sûr, cette liste n'est pas limitative et d'autres types de manuel peuvent être ajoutés selon les besoins.

Le contenu 22 d'un module est soit textuel (description, procédure de maintenance, etc.), soit graphique (dessin technique, schéma blocs, etc.). Ce contenu est structuré. Par exemple, un contenu textuel comporte des indicateurs de parties logiques : chapitre, paragraphe, étape d'une énumération, etc.

Le contenu peut être statique, l'information est présente dans le module 20, ou bien dynamique, le contenu comporte un lien 33 vers l'information stockée à l'extérieur du module 20.

Pour certains modules de la base globale 16, leur contenu 22 fait référence à un ou plusieurs autres contenus d'autres modules. Cette référence est matérialisée par la présence d'un rattachement 34 à un autre module qui comporte le contenu rattaché. Le rattachement indique un identifiant 26 du module rattaché.

En référence de nouveau à la figure 1, l'autre ordinateur 14 est destiné à être utilisé par un archiviste 36 désirant créer un manuel constitué d'un document de présentation structurée d'informations décrivant une machine, comme une rame d'un train.

L'ordinateur 14 de l'archiviste comprend des moyens 38 de stockage de données numériques, par exemple un disque dur, ainsi que des moyens de traitement 40 : microprocesseur, mémoire vive, etc., adaptés pour exécuter des logiciels, par exemple enregistrés sur les moyens de stockage 38. Par ailleurs, l'ordinateur 14 est relié à une imprimante 42.

Trois composants logiciels 44, 46 et 48 sont installés sur l'ordinateur 14 de l'archiviste 36.

Le premier composant logiciel, portant la référence 44, est conçu pour la création d'un fichier d'ébauche de manuel renseignée 50, c'est-à-dire comportant des informations sous forme de rattachements.

Le premier composant logiciel 44 comporte une interface/homme machine 44A, grâce à laquelle l'archiviste 36 interagit avec ce composant 44 pour guider ce dernier dans la création de l'ébauche de manuel. Toutes les fonctions détaillées par la suite nécessitant une intervention de l'archiviste 36 utilisent cette interface 44.

Le premier composant logiciel 44 comporte tout d'abord une fonction 44B de définition de type de manuel, permettant à l'archiviste 36 d'indiquer le type de manuel qu'il souhaite générer.

Par ailleurs, le premier composant logiciel 44 comporte une fonction 44C de récupération d'une liste des modules contenus dans la base globale 16 qui sont rattachés au type de manuel indiqué.

Une fonction d'affichage 44D assure l'affichage de la liste des modules récupérés, ainsi que l'affichage d'une structure de l'ébauche, en vis-à-vis de la liste des modules.

Cette structure est vierge au lancement de la fonction 44D. Le premier composant logiciel 44 offre l'alternative de créer la structure manuellement ou bien d'importer une structure d'un fichier d'ébauche de manuel déjà créé.

Chaque module de la liste est déplaçable vers une partie logique de la structure par cliquer glisser. En d'autres termes, le premier composant logiciel 44 permet la sélection d'un module de l'arborescence et la sélection d'une partie logique dans la structure, où l'archiviste 36 souhaite déposer le module, pour les associer.

Le premier composant 44 comporte une fonction 44E de création d'un fichier d'ébauche 50. Dans l'exemple décrit, le fichier 50 est au format XML. Il reprend la structure indiquée par l'archiviste 36 complétée par des rattachements aux modules insérés par l'archiviste.

Plus précisément, la fonction de création d'un fichier d'ébauche 44E est conçue pour insérer, pour chaque module rattaché par l'archiviste 36, un rattachement au module dans la partie de la structure de l'ébauche associée du fichier 50. Cela signifie qu'une ligne indiquant l'identifiant 26 du module est insérée dans le fichier XML 50.

Ainsi, le premier composant 44 produit en sortie un fichier d'ébauche de manuel 50 au format XML comportant des rattachements vers toutes les informations que l'archiviste 20 souhaite que le manuel contienne. Les modules vers lesquels l'ébauche comporte un rattachement sont appelés modules rattachés directement, tandis que les modules qui ne sont rattachés à l'ébauche que par l'intermédiaire d'un ou plusieurs autres modules, par le biais de rattachements 34 entre modules, sont appelés modules rattachés indirectement.

Le premier composant logiciel 44 est adapté pour stocker ce fichier de sortie 50 dans les moyens de stockage 38, et pour lancer le second composant logiciel 46 qui va chercher ce fichier 50.

Le premier composant logiciel 44 est également conçu pour charger un fichier XML d'ébauche renseignée enregistré préalablement dans les moyens de stockage 38, afin d'être utilisé par le second composant logiciel 46.

Le second composant logiciel 46 sert à la préparation à l'édition du manuel. Il attend en entrée un fichier XML d'ébauche de manuel renseignée 50. Dans l'exemple décrit, le composant 46 reprend l'architecture du logiciel libre COCOON (http://cocoon.apache.org), en la paramétrant pour les besoins spécifiques de l'invention.

Le composant de préparation à l'édition 46 comprend trois étages consécutifs, c'est-à-dire exécutés dans cet ordre, de traitement du fichier d'ébauche renseignée 50 : un étage de vérification 46A, un étage d'assemblage 46B et un étage de mise en forme 46C.

L'étage de vérification 46A est configuré pour parcourir le fichier d'ébauche 50 et vérifier que chaque module rattaché directement à l'ébauche, c'est-à-dire dont cette dernière comporte un rattachement, existe dans la base globale 16. Cet étage 46A est également configuré pour supprimer le rattachement lorsque le module n'existe pas, et pour insérer à la place un message d'erreur.

L'étage de vérification 44A est par ailleurs configuré pour vérifier, le cas échéant, le contenu dynamique des modules rattachés. Cela signifie qu'il est apte à vérifier que le lien 33 que comporte un contenu dynamique pointe bien vers une donnée valide.

Le second étage d'assemblage 44B est configuré pour réaliser trois opérations.

Tout d'abord, il réalise une opération de copie des modules rattachés directement depuis la base globale 16 vers les moyens de stockage 38, dans une base de données intermédiaire 52.

Ensuite, il réalise une opération consistant à recopier, pour chaque module rattaché directement, l'information, c'est-à-dire le contenu, que contient le module à la place de son rattachement dans le fichier d'ébauche 50.

Enfin, la troisième opération consiste, lorsque l'opération précédente est achevée, à parcourir le fichier d'ébauche 50 pour détecter les rattachements qu'il contient et qui proviennent des rattachements 34 entre modules, c'est-à-dire contenus dans les informations recopiées au cours de l'opération précédente. Si le rattachement 34 pointe vers un module rattaché également directement, ce rattachement 34 est remplacé par une référence à la partie logique de la structure de l'ébauche où a été inséré l'information du module. Si le rattachement 34 pointe vers un module rattaché indirectement, c'est-à-dire que l'archiviste n'a pas inséré dans l'ébauche, le rattachement 34 est supprimé.

Le troisième étage de mise en forme 46C est configuré pour mettre en forme l'ébauche vérifiée et assemblée, à l'aide d'une feuille de style 56 associant à chaque partie de structure, de l'ébauche ou bien du contenu recopié, un style dactylographique prédéterminé. Cette feuille de style indique notamment la police, la taille des caractères, le soulignement, etc., à utiliser pour chaque partie logique de l'ensemble du fichier d'ébauche 50 : chapitre, section, paragraphe, note informelle, texte mis en évidence, etc.

Ce troisième étage 46C est également conçu pour piloter le troisième composant logiciel.

Le troisième composant logiciel porte la référence 48 et est un périphérique d'édition du manuel à partir du fichier d'ébauche 50 fourni en sortie du second composant logiciel de traitement 46. Dans l'exemple décrit, il est propre à assurer la génération d'un document pdf 58 et à enregistrer ce document dans les moyens de stockage 38. Ainsi, ces derniers contiennent les manuels finaux, tels qu'ils sont livrés à leur client respectif.

Dans d'autres modes de réalisation, le périphérique d'édition 48 est propre à générer un fichier html, ou Word, etc.

Enfin, le troisième composant logiciel 48 comporte une fonction de pilotage de l'imprimante 42 à partir du fichier 58 généré, afin d'obtenir un manuel imprimé.

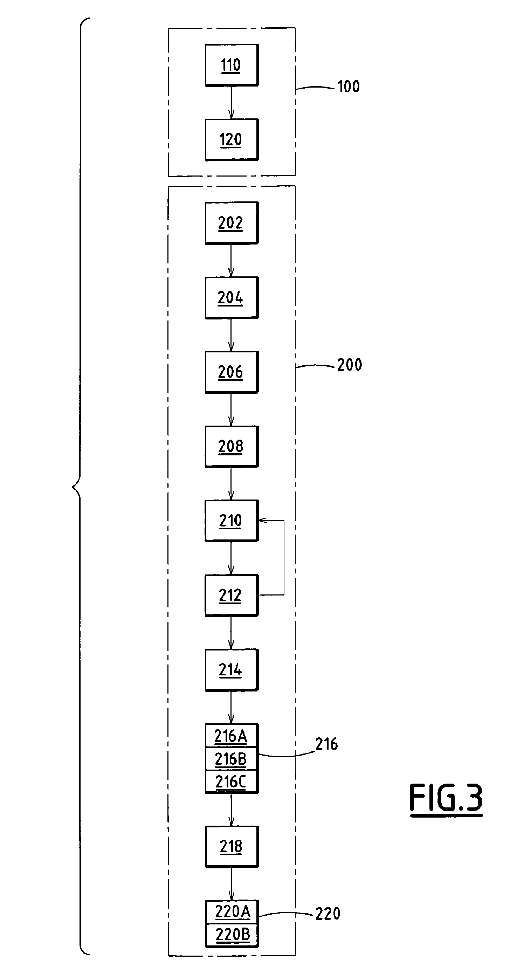

Le procédé de génération d'un manuel représenté sur la figure 3 comporte deux phases principales : une phase d'initialisation 100 du système 10 et une phase de mise en oeuvre 200 de ce système 10. La phase de mise en oeuvre 200 est répétée par l'archiviste 36 pour chaque création d'un nouveau manuel, tandis que la phase d'initialisation 100 est réalisée de manière continue, y compris pendant et suite aux phases de mise en oeuvre 200, par le personnel technique 18, de manière que la base globale 16 comporte les dernières informations disponibles.

La phase d'initialisation 100 comprend une première étape 110 consistant à créer la base de données globale 16, et une seconde étape 120 consistant à associer, dans la base globale 16, chaque module avec l'élément technique auquel l'information qu'il contient se rapporte. Au cours de cette étape 120, les modules sont également associés avec au moins un type de manuel.

La phase de mise en oeuvre 200 comprend une première étape 202 au cours de laquelle l'archiviste 36 lance le premier composant logiciel 44.

Il exécute, au cours d'une étape 204, la fonction 44B pour indiquer au composant logiciel 44 le type de manuel qu'il souhaite créer.

Le composant logiciel 44 exécute, au cours d'une étape 206, la fonction 44C de récupération de la liste des modules rattachés au type de manuel indiqué.

Puis, au cours d'une étape 208, le composant logiciel 44 exécute la fonction 44D d'affichage d'une structure vierge d'ébauche et de la liste des modules. L'archiviste crée la structure également au cours de cette étape 208.

Au cours d'une étape 210, l'archiviste 20 renseigne l'ébauche de manuel en cliquant glissant les modules depuis la liste des modules vers une partie logique de la structure de l'ébauche.

L'étape précédente 210 est répétée autant de fois que l'archiviste 20 en a besoin.

Lorsque l'archiviste 20 a terminé le renseignement, il commande le composant 44 pour que ce dernier génère, au cours d'une étape 212 réalisée par la fonction 44E, un fichier XML d'ébauche de manuel renseignée 50. Le composant logiciel 44 stocke ce fichier dans les moyens de stockage 38 et lance le second composant logiciel 44 afin d'éditer l'ébauche de manuel 50.

L'édition se fait généralement directement à la suite de l'étape 210 de renseignement de l'ébauche. Néanmoins, l'édition peut également intervenir longtemps, parfois plusieurs mois, après que le fichier d'ébauche ait été créé et stocké. C'est le cas par exemple lorsque le client souhaite obtenir une nouvelle version mise à jour de son manuel.

L'édition est réalisée par les composants de préparation à l'édition 46 et d'édition 48, sans intervention de l'archiviste 36.

Ainsi, la phase de mise en oeuvre 200 comprend une étape 214 de vérification du fichier d'ébauche 50, réalisée par l'étage de vérification 46A.

Il s'en suit une étape 216 d'assemblage de l'ébauche, réalisée par l'étage d'assemblage 46B. Les trois opérations que cet étage 46B est capable d'effectuer sont réalisées. Ces trois opérations sont représentées sur la figure 3 par les sous-étapes 216A, 216B et 216C.

L'étage de mise en forme 46C réalise alors la mise en forme (étape 218) de l'ébauche de manuel à l'aide de la feuille de style 56, préalablement spécifiée par l'archiviste 36.

Au cours d'une dernière étape de pilotage 220, le second composant logiciel 46 pilote le troisième composant 48 pour que ce dernier réalise deux opérations. Tout d'abord, il génère (220A) le manuel final au format pdf, à partir du fichier d'ébauche obtenu suite aux traitements effectuées par les différents étages du composant logiciel 46. Le fichier pdf 58, constituant le manuel final, est stocké dans les moyens de stockage 38. Ensuite, le périphérique d'édition 48 pilote (220B), l'imprimante 42 pour imprimer le fichier et obtenir le manuel final imprimé.

Le manuel final est autonome de la base globale 16, c'est-à-dire que les informations que l'archiviste 31 souhaitait qu'il contienne ne sont pas liées à cette base 16.

Comme cela a été expliqué en référence à la figure 1, le pilotage du périphérique d'édition peut, dans d'autres modes de réalisation, générer le manuel au format html, ou Word, suivant la nature du périphérique 48 utilisé, pour ensuite être imprimé par l'imprimante 42.

## Revendications

1. Procédé de génération d'un manuel constitué d'un document de présentation structurée d'informations décrivant une machine, **caractérisé en ce qu'**il comprend, d'une part, les étapes consistant à :
- créer (110) un entrepôt de données (16) regroupant des informations se rapportant chacune à au moins un élément technique d'au moins une machine, et
- associer (120), dans l'entrepôt de données (16), chaque information avec l'élément technique auquel elle se rapporte,
et, d'autre part, les étapes successives consistant à :
- créer (212) une ébauche de manuel (50) définie par une structure de manuel constituée de parties logiques,
- insérer (212), dans une partie logique sélectionnée de la structure de l'ébauche (50) de manuel, au moins un rattachement à une information sélectionnée parmi les informations de l'entrepôt de données (16), et
- piloter (220) un périphérique (48) d'édition de l'ébauche de manuel (50) complétée des rattachements pour générer un manuel (58), autonome de l'entrepôt de données (16).

2. Procédé selon la revendication 1, **caractérisé en ce que** au moins une information de l'entrepôt de données (16) comporte un rattachement (34) à une autre information de l'entrepôt de données (16).

3. Procédé selon la revendication 1 ou 2, **caractérisé en ce qu'**il comprend une étape (216), consistant à recopier dans l'ébauche (50) les informations rattachées à l'ébauche (50).

4. Procédé selon l'une quelconque des revendications 1 à 3, **caractérisé en ce qu'**il comprend une étape consistant à créer une structure de l'ébauche (50).

5. Procédé selon la revendication 4, **caractérisé en ce que** la création d'une structure consiste à importer la structure d'une ébauche de manuel déjà créée.

6. Procédé selon l'une quelconque des revendication 1 à 5, **caractérisé en ce qu'**il comprend :
- une étape d'association (120), dans l'entrepôt de données (16), de chaque information avec au moins un type de manuel,
- une étape de récupération (206) d'une liste des informations de l'entrepôt (16) rattachées au type de manuel auquel correspond l'ébauche, et
- une étape d'affichage (208) de la liste des informations récupérées.

7. Procédé selon la revendication 6, **caractérisé en ce que** l'étape d'affichage (208) comporte l'affichage de la structure de l'ébauche en vis-à-vis de la liste des informations, et **en ce qu'**il comprend une étape de sélection d'une partie logique de la structure et d'une information de la liste par cliquer glisser de l'information vers la partie logique.

8. Procédé selon l'une quelconque des revendications précédentes, **caractérisé en ce qu'**il comprend une étape (218) de mise en forme de l'ébauche de manuel (50) à l'aide d'une feuille de style (56) associant à chaque partie logique de l'ébauche (50) un style dactylographique prédéterminé.

9. Procédé selon l'une quelconque des revendications précédentes, **caractérisé en ce que** le pilotage du périphérique d'édition (48) génère le manuel dans un des formats choisi parmi : pdf, html, Word.

10. Système de génération d'un manuel constitué d'un document de présentation structurée d'informations décrivant une machine, **caractérisé en ce qu'**il comprend, d'une part un entrepôt de données (16) regroupant des informations se rapportant chacune à au moins un élément technique d'au moins une machine, chaque information étant associé, dans l'entrepôt de données (16), avec l'élément technique auquel elle se rapporte, et, d'autre part :
- des moyens de création (44E) d'une ébauche de manuel (50) définie par une structure de manuel constituée de parties logiques,
- des moyens d'insertion (44E), dans une partie logique de la structure de l'ébauche de manuel (50), d'au moins un rattachement à une information sélectionnée parmi les informations de l'entrepôt (16), et
- des moyens de pilotage (46C) d'un périphérique d'édition (48) de l'ébauche de manuel (50) complétée des rattachements pour générer un manuel (58), autonome de l'entrepôt de données (16).

11. Système selon la revendication 10, **caractérisé en ce que** au moins une information de l'entrepôt de données (16) comporte un rattachement (34) à une autre information de l'entrepôt de données (16).

12. Système selon la revendication 10 ou 11, **caractérisé en ce qu'**il comprend des moyens (46B) de recopie dans l'ébauche (50) des informations rattachées à l'ébauche.

13. Système selon l'une quelconque des revendications 10 à 12, **caractérisé en ce qu'**il comprend des moyens (44D) de création d'une structure de l'ébauche (50).

14. Système selon la revendication 13, **caractérisé en ce que** les moyens (44D) de création d'une structure sont aptes à importer la structure d'une ébauche de manuel déjà créée.

15. Système selon l'une quelconque des revendication 10 à 14, **caractérisé en ce que** chaque information dans l'entrepôt de données, est associée avec au moins un type de manuel, et **en ce qu'**il comprend :
- des moyens (44C) de récupération des informations de l'entrepôt (16) rattachées au type de manuel auquel correspond l'ébauche, et
- des moyens d'affichage (44D) d'une liste des informations récupérées.

16. Système selon la revendication 15, **caractérisé en ce que** les moyens d'affichage (44D) sont aptes à afficher la structure de l'ébauche en vis-à-vis de la liste des informations, et **en ce qu'**ils permettent le cliquer glisser d'une information affichée vers une partie logique de la structure de l'ébauche.

17. Système selon l'une quelconque des revendications 10 à 16, **caractérisé en ce qu'**il comprend des moyens (46C) de mise en forme de l'ébauche de manuel (50) à l'aide d'une feuille de style (56) associant à chaque partie logique de l'ébauche un style dactylographique prédéterminé.

18. Système selon l'une quelconque des revendications 10 à 17, **caractérisé en ce qu'**il comprend le périphérique d'édition (48) et que ce dernier est apte à générer le manuel (58) dans un des formats choisi parmi : pdf, html, Word.
